# EUROPEAN PATENT APPLICATION

(11) **EP 2 930 789 A1**
(43) Date of publication of application: **14.10.2015**
(21) Application number: 13859712.5
(22) Date of filing: 01.08.2013
(51) Int. Cl.: H01Q 21/00

(54) **BROADBAND MOBILE PHONE ANTENNA WITH PARASITIC ANTENNA AND MOBILE PHONE THEREOF**

(30) Priority: 07.12.2012 CN 201210522150
(71) Applicant: Huizhou TCL Mobile Communication Co., Ltd., Huizhou, Guangdong 516006 (CN)
(72) Inventor: AN, Xinrong, Ningbo Zhejiang 315040 (CN)
(74) Representative: Brachmann, Roland W.
(86) International application number: PCT/CN2013/080604
(87) International publication number: WO 2014/086163

(57) **Abstract**

A broadband mobile phone antenna with a parasitic antenna and a mobile phone thereof are disclosed in the present invention, said mobile phone antenna includes: a main antenna and the matching circuit thereof, a first antenna switch connected with said main antenna and the matching circuit thereof; said first antenna is used to perform frequency band switching. Said mobile phone antenna also includes: the parasitic antenna, at least two second matching circuits, and a second antenna switch connected with said parasitic antenna and said second matching circuits; said parasitic antenna is set on one side of said main antenna; said second antenna switch is controlled by a mobile phone base band chip, used to make said parasitic antenna switching between said second matching circuits. In the present invention, the intention of making the mobile phone satisfying the requirements of different working frequency bands is enabled by making the coupling of the parasitic antenna and the main antenna influencing the resonant frequency of said main antenna, by changing the load character of the parasitic antenna. The working band of the mobile phone antenna is extended, and simultaneously the performance of the mobile phone antenna is significantly improved.

## Description

### FIELD OF THE INVENTION

The present invention relates to the field of mobile terminals, and in particular to, a broadband mobile phone antenna with a parasitic antenna and a mobile phone.

### BACKGROUND OF THE INVENTION

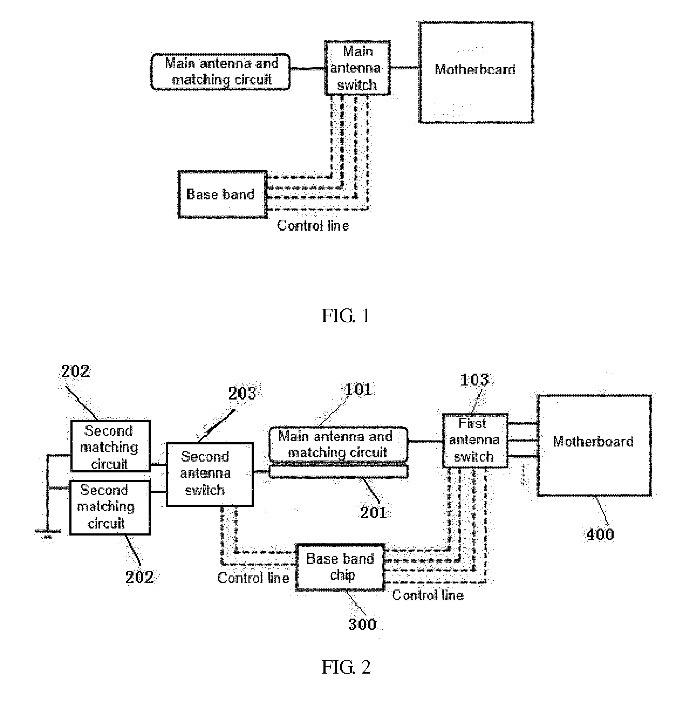

The mobile network has lately developed from 3G to LTE (Long Term Evolution, long term evolution). Meanwhile, the traditional 2G and 3G are still in use. Therefore, the existing LTE mobile phone is required to be capable of covering multiple frequency bands including 2G/3G/4G. Accordingly, a very wide mobile phone antenna band width is required. However, the size of a mobile phone motherboard is limited; therefore, the available space for a mobile phone antenna is also limited. The traditional mobile phone antenna cannot be used satisfactorily to cover different frequency bands as required, and cannot realize low frequency bandwidth-intensive coverage particularly. As shown in FIG. 1, the antenna part of the traditional mobile phone radio frequency front end includes a main antenna and a matching circuit thereof, wherein the main antenna is controlled by a main antenna switch to switch between different frequency bands. The logic of the main antenna switch is generally set by a radio frequency hardware engineer together with a radio frequency software engineer.

In order to enable the mobile phone antenna to cover a wider frequency range, the relevant researchers have proposed the technology of introducing a parasitic antenna on the traditional mobile phone antenna. However, it is found in tests that even if the frequency band coverage requirement is fulfilled, the antenna performance requirement is very difficult to satisfy. Particularly, when covering a low frequency bandwidth-intensive of 700M (LTE Band12, B17 and the like) ∼ 960MHz (GSM900, WCDMA Band8), the antenna performances are difficult to satisfy the requirements.

Therefore, the prior art still needs to be improved and developed.

### SUMMARY OF THE INVENTION

A technical problem for the present invention to solve is to provide a broadband mobile phone antenna with a variable parasitic antenna and a mobile phone to solve the technical problem that the existing mobile phone cannot satisfy low frequency bandwidth-intensive coverage.

The technical solution adopted by the present invention to solve the technical problem is as follows:
1. A broadband mobile phone antenna with a parasitic antenna includes a main antenna and the matching circuit thereof, and a first antenna switch connected with said main antenna and the matching circuit thereof, wherein said first antenna switch is also connected with a mobile phone base band chip and a mobile phone motherboard, used to perform frequency band switching of said main antenna. The broadband mobile phone antenna further includes a parasitic antenna, at least two second matching circuits and a second matching circuit connected with said parasitic antenna and said second matching circuits. Said second antenna switch is also connected with a mobile phone base band chip, wherein:
   - said parasitic antenna is set on one side of said main antenna, and is used to change the resonance frequency of the main antenna by coupling with said main antenna;
   - said second antenna switch is controlled by the mobile phone base band chip, working on the same frequency band as that of said first antenna switch, and is used to make said parasitic antenna switch between said second matching circuits; and
   - the first antenna switch is a main antenna switch, and the second antenna switch is a parasitic antenna switch.

According to the broadband mobile phone antenna with a parasitic antenna, one end of said second matching circuit is grounded.

According to the broadband mobile phone antenna with a parasitic antenna, the throw number of said second antenna switch is greater than or equal to the number of said second matching circuit.

According to the broadband mobile phone antenna with a parasitic antenna, said parasitic antenna is arranged on a main antenna support, and shares the support with the main antenna.

According to the broadband mobile phone antenna with a parasitic antenna, said parasitic antenna is arranged on a main PCB of the mobile phone in a printed manner.

According to the broadband mobile phone antenna with a parasitic antenna, said parasitic antenna may be an FPC antenna, a metal stamping antenna or a laser direct structuring antenna.

According to the broadband mobile phone antenna with a parasitic antenna, said second antenna switch is arranged on a radio frequency circuit of the mobile phone motherboard.

The broadband mobile phone antenna with a parasitic antenna includes two said second matching circuits.

A broadband mobile phone adopts the broadband mobile phone antenna with a parasitic antenna.

According to the broadband mobile phone antenna with a parasitic antenna and the mobile phone provided by the present invention, a parasitic antenna is additionally arranged on the basis of not changing the original main antenna of the mobile phone, and said parasitic antenna is connected with different matching circuits through a parasitic antenna switch so as to have different load characters. Based on this, the main antenna is enabled to work at different working states by making the coupling of the parasitic antenna and the main antenna influence the resonance frequency of said main antenna. The present invention enables the mobile phone antenna to cover different working frequency bands, thus expanding the working band of the mobile phone antenna, and simultaneously the performance of the mobile phone antenna is significantly improved. Moreover, the present invention is simple to design, has very low implementation cost, and is very suitable to be popularized and used in a broadband mobile phone integrating LTE, 3G and 2G.

### BRIEF DESCRIPTION OF DRAWINGS

- FIG. 1: is a schematic view of a traditional mobile phone antenna.
- FIG. 2: is a structural schematic view of an embodiment of a broadband mobile phone antenna with a parasitic antenna according to the invention.
- FIG. 3: is a schematic view for specific connection of the embodiment of the broadband mobile phone antenna with a parasitic antenna according to the invention.
- FIG. 4: is a structural schematic view of a broadband mobile phone antenna with a parasitic antenna according to the embodiment of the invention.

### DETAILED DESCRIPTION OF THE EMBODIMENTS

To make the objective, technical solution and advantages of the present invention more clear, the present invention is further described in details with reference to the drawings and embodiments hereinafter. It should be understood that the specific embodiments described here are merely used for explaining the present invention, but are not intended to limit the present invention.

Please refer to FIG. 2 for one embodiment of a broadband mobile phone antenna with a parasitic antenna according to the present invention. FIG. 2 is a structural schematic view of one embodiment of the broadband mobile phone antenna with a parasitic antenna according to the present invention. Said mobile phone antenna includes: a main antenna and the matching circuit thereof 101, and a first antenna switch 103 connected with said main antenna and said matching circuit thereof. In the embodiment, the matching circuit of the main antenna is denoted as a first matching circuit. Said first antenna switch is also connected with a mobile phone base band chip 300 and a mobile phone motherboard 400, used to perform frequency band switching of said main antenna. Moreover, the broadband mobile phone antenna with a parasitic antenna further includes a parasitic antenna 201 and at least two second matching circuits 202 as well as a second antenna switch 203 connected with said parasitic antenna 201 and said second matching circuit 202. Said second antenna switch 203 is also connected with the mobile phone base band chip 300.

Said parasitic antenna 201 is set on a position at one side of said main antenna and close to the main antenna, and is used to change the resonance frequency of the main antenna by coupling with said main antenna. Said second antenna switch 203 is used to perform to make said parasitic antenna 201 switch between said second matching circuits 202. Said first antenna switch 103 is a main antenna switch, and said second antenna switch 203 is a parasitic antenna switch.

Further, the second antenna switch 102 is controlled by the mobile phone base band chip 300, working on the same frequency band as that of the first antenna switch 103. For example, the main antenna switch selects to work at a GSM900 frequency band through a preset logic. Then, said second antenna switch when selecting the working frequency band, is required to work at the GSM900 frequency band as well. In addition, the logic setting of said second antenna switch depends on the second matching circuit and the debugging result of the entire antenna.

Moreover, one end of each said second matching circuit 202 is grounded. Said parasitic antenna is connected to different second matching circuits through said second antenna switch, so that said parasitic antenna has different load characters, so as to make the coupling of said parasitic antenna and said main antenna changed correspondingly, thus achieving the effects of influencing the resonance frequency of said main antenna and realizing to cover different frequency bands.

Preferably, the throw number of said second antenna switches needs to be greater than or equal to the number of said second matching circuit.

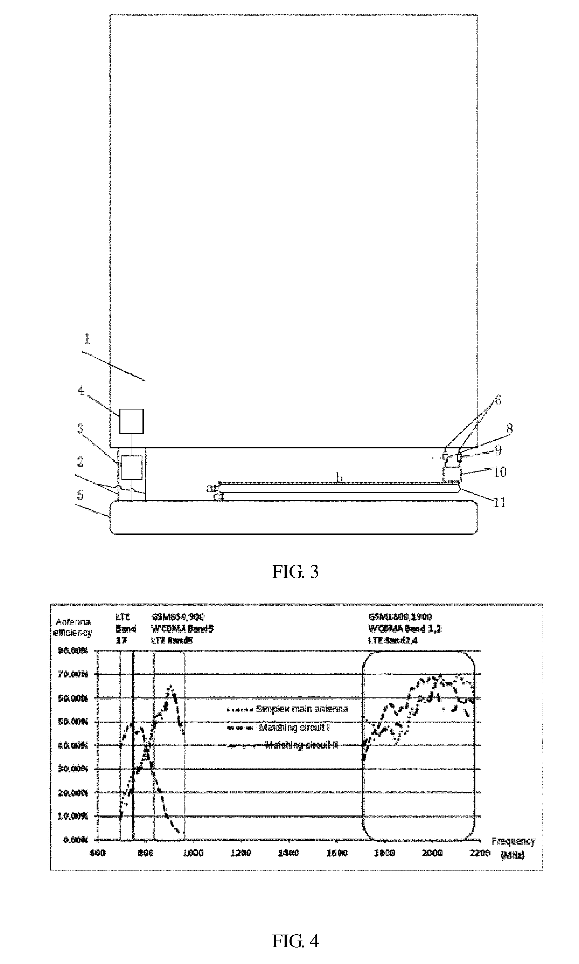

The connection situation of said broadband mobile phone antenna with a parasitic antenna in a mobile phone is described in details hereinafter. Referring to FIG. 3, generally the existing mobile phone antenna is arranged in a limited space at the end of the mobile phone motherboard 1, including an antenna feed and the corresponding matching circuit 3 (namely said first matching circuit). A main antenna switch 4 (namely said first antenna switch) is correspondingly set on the radio frequency circuit of the motherboard 1. Some further includes an antenna grounding switch 2. Based on this, the present invention is additionally provided with a parasitic antenna 11 branch, a parasitic antenna switch 10 (namely said second antenna switch), two said second matching circuits which are namely matching circuit I 8 and matching circuit II 9 in the embodiment, and two grounding switches 6 corresponding to said matching circuit I and said matching circuit II. In the embodiment, said parasitic antenna is set close to said main antenna, and may be selected from an FPC, Metal Stamping (metal stamping) or LDS (laser direct structuring) switch which is directly made on a main antenna support according to the design requirements, and shares the support with said main antenna, so as to be convenient for debugging. Said parasitic antenna may also be made on a main PCB of the mobile phone in a printed manner, so as to save the cost. Preferably, said second antenna switch may be set on a radio frequency circuit of the mobile phone motherboard, and is used to make said parasitic antenna switch between said matching circuit I 8 and matching circuit II 9. The number of said second matching circuit may also be increased according to demands (for example, a matching circuit III and a matching circuit 4, and the like may be added), so that said parasitic antenna has more load characters, thus enabling the main antenna to have more resonance characters. For the consideration of design, two said second matching circuits are adopted in the embodiment, which are simplest, and can satisfy the design requirements of most existing mobile phone antennas.

A traditional mobile phone antenna is difficult to realize low frequency bandwidth-intensive coverage due to such reasons as the size of the mobile phone motherboard and the available space of the mobile phone antenna and the like. Generally, the bandwidth coverage of 824M ∼ 960M (GSM850, GSM900, WCDMA) is generally the limit. The working performance of the mobile phone antenna may be influenced if the bandwidth is deviated to a low frequency of 700MHz. In the present invention, the parasitic antenna 11 is connected to different second matching circuits (matching circuit I 8 or matching circuit II 9) through the parasitic antenna switch 10, so that the coupling of the parasitic antenna and the main antenna 5 is altered by changing the load character of the parasitic antenna 11, so as to realize the intention of changing the resonance character of the main antenna.

A specific mobile phone project is taken as an example hereinafter, wherein the frequency band configuration of the mobile phone is as follows:
LTE: Band2/4/5/17; WCDMA: Band 1/2/5; GSM: GSM850, 900, 1800, 1900.

The space dimension occupied by the main antenna is: 50mm*9.8mm*5mm. It is almost impossible to use the traditional simplex main antenna to realize low frequency coverage of 704MHz ∼ 960MHz. Please refer to FIG. 4 for the design efficiency of the simplex main antenna. Under the premise of not changing the design of said main antenna, a frequency band and load variable parasitic antenna is additionally arranged based on the main antenna of the present invention. As shown in FIG. 3, the size of said parasitic antenna in the embodiment is as follows: the length a = 1.5mm, the width b = 35mm, and the distance from the parasitic antenna and the main antenna c = 3mm. Meanwhile, an SPDT (single-pole double-throw) parasitic antenna switch 10 and two corresponding second matching circuits (said two second matching circuits are respectively the matching circuit I and the matching circuit II, wherein the matching circuit I is 0 ohm, which is namely a short circuit, and the matching circuit II is a circuit connected with an 22nH inductance) are additionally arranged, then the efficiency of the mobile phone main antenna is as shown in FIG. 4. The logic configuration of said parasitic antenna switch 10 is as shown in Table I:

**Table I:**

| Logic Configuration of Parasitic Antenna Switch | |
|---|---|
| Second matching circuit | Working band of mobile phone |
| Matching circuit I (8) | GSM1800, 1900, WCDMA Band1, 2, LTE Band2 ,4, 17 |
| Matching circuit II (9) | GSM850, 900, WCDMA Band5, LTE Band5 |

Please refer to FIG. 4 again to compare the design of the present invention and the design of the traditional simplex main antenna, wherein the efficiency of the design of the traditional simplex main antenna is only 10% ∼ 30% at 704MHz ∼ 746MHz, which cannot satisfy the performance requirements of the mobile phone antenna. When the broadband mobile phone antenna of the present invention works at LTE Band 17, the parasitic antenna therein is connected to the matching circuit I. When the broadband mobile phone antenna of the present invention works at GSM850, 900, WCDMA Band5 and LTE Band 5, the parasitic antenna therein is connected to the matching circuit II. In this way, the efficiency of the mobile phone antenna on all the low frequency bands can be ensured to be higher than 40%, and is higher than 50% on most frequency bands. Moreover, when the broadband mobile phone antenna of the present invention works at GSM1800, 1900, WCDMA Band 1, 2, LTE Band 2 and 4, the mobile phone antenna both has a higher antenna efficiency no matter the parasitic antenna therein is connected to the matching circuit I or the matching circuit II. Therefore, said broadband mobile phone antenna according to the present invention can satisfy the requirements on the performances of the mobile phone antenna in all the working bands.

Preferably, in order to prove the actual effects of said broadband mobile phone antenna according to the present invention, said parasitic antenna of said broadband mobile phone antenna in the embodiment is not debugged unless debugging of said main antenna is finished. During actual project debugging, the main antenna and the parasitic antenna may also be debugged together to repeatedly test the result so as to achieve the optimum antenna performances.

The foregoing embodiment utilizes the parasitic antenna to expand the low frequency band (700 ∼ 960MHz) of the mobile phone antenna. Similarly, said broadband mobile phone antenna of the present invention is also applied to expand high frequency band (applicable to LTE1700 ∼ 2600MHZ, and even higher); moreover, expanding the high frequency band is easier because the wavelength is shorter. The realizing principle of the high frequency band is same as that of the low frequency band, and will not be repeatedly described any longer here.

Based on the foregoing embodiment, the present invention further provides a mobile phone, which adopts said broadband mobile phone antenna with a parasitic antenna according to embodiment of the foregoing embodiment.

To sum up, according to the broadband mobile phone antenna with a parasitic antenna and the mobile phone provided by the present invention, a parasitic antenna is additionally arranged on the original main antenna of the mobile phone and the limited space; and said parasitic antenna is switched between different matching circuits through a parasitic antenna switch so as to have different load characters, and thus influencing the resonance frequency of the original main antenna of the mobile phone, so that the mobile phone antenna can work at different working states so as to satisfy the requirements of different working bands, thus indirectly expanding the working band of the main antenna of the mobile phone. In addition, the performance of the mobile phone antenna is significantly improved through the present invention. Moreover, the present invention is simple to design, has very low implementation cost, and is very suitable to be popularized and used in a multiple-frequency band mobile phone integrating LTE, 3G and 2G.

It should be understood that applications of the present invention are not limited to the foregoing examples. A person having ordinary skill in the art may improve or transform the present invention according to the foregoing descriptions. All improvements and transformations shall fall within the protection scope of the claims of the present invention.

## Claims

1. A broadband mobile phone antenna with a parasitic antenna, including a main antenna and a matching circuit thereof, as well as a first antenna switch connected with the main antenna and the matching circuit thereof, wherein the first antenna switch is further connected with a mobile phone base band chip and a mobile phone motherboard, used to perform frequency band switching of said main antenna; the broadband mobile phone antenna is **characterized by** further including a parasitic antenna, at least two second matching circuits and a second antenna switch connected with the parasitic antenna and the second matching circuits; and the second antenna switch is also connected with the mobile phone base band chip, wherein:
- said parasitic antenna is set on one side of the main antenna, and is used to change the resonance frequency of the main antenna by coupling with said main antenna;
- said second antenna switch is controlled by a mobile phone base band chip, working on the same frequency band as that of said first antenna switch, and is used to perform switching of said parasitic antenna between said second matching circuits; and
- said first antenna switch is a main antenna switch, and said second antenna switch is a parasitic antenna switch.

2. The broadband mobile phone antenna with a parasitic antenna according to claim 1, wherein one end of said second matching circuit is grounded.

3. The broadband mobile phone antenna with a parasitic antenna according to claim 2, wherein the throw number of said second antenna switch is greater than or equal to the number of said second matching circuit.

4. The broadband mobile phone antenna with a parasitic antenna according to claim 2, wherein said parasitic antenna is set on a main antenna support, and shares the support with the main antenna.

5. The broadband mobile phone antenna with a parasitic antenna according to claim 2, wherein said parasitic antenna is set on a main PCB of the mobile phone in a printed manner.

6. The broadband mobile phone antenna with a parasitic antenna according to claim 4, wherein said parasitic antenna may be an FPC antenna, a metal stamping antenna or a laser direct structuring antenna.

7. The broadband mobile phone antenna with a parasitic antenna according to claim 1, including two said second matching circuits.

8. A broadband mobile phone, **characterized by** adopting the broadband mobile phone antenna with a parasitic antenna according to any one of claims 1-7.

9. A broadband mobile phone antenna with a parasitic antenna, including a main antenna and the matching circuit thereof, and a first antenna switch connected with the main antenna and the matching circuit thereof, wherein said first antenna switch is also connected with a mobile phone base band chip and a mobile phone motherboard, used to perform frequency band switching of said main antenna; the broadband mobile phone antenna is **characterized by** further including a parasitic antenna, at least two second matching circuits and a second antenna switch connected with said parasitic antenna and said second matching circuits; and the second antenna switch is also connected with a mobile phone base band chip, wherein:
- said parasitic antenna is set on one side of the main antenna, and is used to change the resonance frequency of said main antenna by coupling with the main antenna;
- said second antenna switch is controlled by the mobile phone base band chip, working on the same frequency band as that of the first antenna switch, and is used to make said parasitic antenna switch between said second matching circuits.
- said first antenna switch is a main antenna switch, and said second antenna switch is a parasitic antenna switch; and said second antenna switch is set on a radio frequency circuit of the mobile phone motherboard.

10. The broadband mobile phone antenna with a parasitic antenna according to claim 9, wherein one end of said second matching circuit is grounded.

11. The broadband mobile phone antenna with a parasitic antenna according to claim 10, wherein the throw number of said second antenna switch is greater than or equal to the number of said second matching circuit.

12. The broadband mobile phone antenna with a parasitic antenna according to claim 10, wherein said parasitic antenna is set on a main antenna support, and shares the support with the main antenna.

13. The broadband mobile phone antenna with a parasitic antenna according to claim 10, wherein said parasitic antenna is set on a main PCB of the mobile phone in a printed manner.

14. The broadband mobile phone antenna with a parasitic antenna according to claim 13, wherein said parasitic antenna may be an FPC antenna, a metal stamping antenna or a laser direct structuring antenna.

15. The broadband mobile phone antenna with a parasitic antenna according to claim 9, including two said second matching circuits.
